# EUROPEAN PATENT APPLICATION

(11) **EP 4 841 884 A1**
(43) Date of publication of application: **18.11.2026**
(21) Application number: 24917036.6
(22) Date of filing: 13.12.2024
(51) Int. Cl.: H02P 21/12

(54) **CONTROL DEVICE FOR ROTARY ELECTRIC MACHINE, CONTROL PROGRAM FOR ROTARY ELECTRIC MACHINE, AND ROTARY ELECTRIC MACHINE SYSTEM**

(30) Priority: 09.01.2024 JP 2024001148
(71) Applicant: DENSO CORPORATION, Kariya-city, Aichi 448-8661 (JP)
(72) Inventor: UGA, Toshiaki, Kariya- city, Aichi 4488661 (JP); SUZUKI, Takashi, Kariya- city, Aichi 4488661 (JP)
(74) Representative: Kuhnen & Wacker Patent- und Rechtsanwaltsbüro PartG mbB
(86) International application number: PCT/JP2024/044315
(87) International publication number: WO 2025/150352

(57) **Abstract**

A rotating electrical machine (40) includes a field winding (70) and a stator winding (52). A high-frequency voltage is applied to the stator winding (52) to induce voltage at the field winding, thereby creating a flow of field current through the field winding. A control device (30) includes a switch controller that performs switching control for an inverter (20) so as to apply a composite voltage of the high-frequency voltage and a fundamental wave voltage to the stator winding, an excitation reducing unit that performs excitation reduction control for decreasing an excitation voltage component that is a component of the composite voltage and that causes the field current to flow through the field winding, a field weakening unit that performs field weakening control for adjusting a phase of a fundamental wave current flowing through the stator winding by the fundamental wave voltage so as to generate a magnetic flux in a direction opposite to a magnetic flux generated by the field winding, and a control changing unit that changes whether the excitation reduction control and/or the field weakening control are to be executed according to an operating region of the rotating electrical machine to suppress an output voltage from the inverter.

## Description

The present application claims the benefit of priority of Japanese Patent Application No. 2024-001148 filed on January 9, 2024, the disclosure of which is incorporated in its entirety herein by reference.

### Technical Field

This disclosure relates generally to a control apparatus for a rotating electrical machine.

### Background Art

For example, there is known a rotating electrical machine system including a first power converter that causes a current to flow through a stator winding of a synchronous motor, and a second power converter that causes a field current to flow through a field winding of a rotor (see First Patent Document). In the rotating electrical machine system described in First Patent Document, when an output voltage of the first power converter exceeds a voltage limit value in a high load condition, a target value of magnetic flux to be generated by the field winding is decreased. This results in a decrease in target value of a field current flowing through the field winding, so that the magnetic flux in the field winding decreases, whereby the output voltage of the first power converter is suppressed to the voltage limit value.

### [Prior Art Document]

### [Patent Document]

First Patent Document : Japanese Patent First Publication No. 1993-30774

### SUMMARY OF THE INVENTION

Incidentally, there is known a self-excited field winding type rotating electric machine that applies a high-frequency excitation voltage to a stator winding to induce a voltage at a field winding to create a flow of a field current in the field winding. In the self-excited field winding type rotating electric machine, a decrease in magnetic flux in the field winding may be achieved by decreasing a component of the voltage, as applied to the field winding, which serves to excite the field winding (which will also be referred to below as "excitation reduction control"). The decrease in magnetic flux in the field winding may alternatively be achieved by causing a negative *d*-axis current to flow through the stator winding so as to generate a magnetic flux in a direction opposite to the magnetic flux generated by the field winding (which will also be referred to below as "field weakening control").

The present disclosure has focused on the fact that, when the rotating electrical machine outputs the same torque in the excitation reduction control mode and the field weakening control mode, a magnitude relationship between an output voltage of a power converter (inverter) during the excitation reduction control mode and an output voltage of the power converter during the field weakening control mode changes depending on an operation region of the rotating electric machine.

The present disclosure has been made to solve the above problem, and a main object thereof is to suppress an output voltage from an inverter by selectively using the excitation reduction control mode and the field weakening control mode in a control apparatus for a rotating electrical machine.

According to a first aspect of this disclosure in order to solve the above problem, there is provided a control device that is applied to a rotating electrical machine system comprising: a rotating electrical machine having a stator including a stator winding and a rotor including a field winding; and an inverter electrically connected to the stator winding, the rotating electrical machine being configured such that a field current flows through the field winding by a voltage induced in the field winding as a result of a high-frequency voltage being applied to the stator winding. The control device comprises: (a) a switch controller configured to perform switching control for the inverter so as to apply to the stator winding a composite voltage of the high-frequency voltage and a fundamental wave voltage having a frequency different from a frequency of the high-frequency voltage; (b) an excitation reducing unit configured to perform excitation reduction control for reducing, from a current level, an excitation voltage component that is one of voltage components included in the composite voltage and that causes the field current to flow through the field winding; (c) a field-weakening unit configured to perform field-weakening control for adjusting a phase of a fundamental wave current flowing through the stator winding by the fundamental wave voltage so as to generate a magnetic flux in a direction opposite to a magnetic flux generated by the field winding; and (d) a control changing unit configured to change whether the excitation reduction control by the excitation reducing unit and/or the field-weakening control by the field-weakening unit are to be executed, in accordance with an operating region of the rotary electric machine to suppress an output voltage from the inverter.

The rotating electrical machine is, as described above, configured such that a voltage is induced in the field winding by applying the high-frequency voltage to the stator winding, so that the field current flows. Further, the switch controller works to perform the switching control for the inverter so as to cause the high-frequency voltage, which has a higher frequency than the fundamental wave voltage, to flow through the stator winding in addition to the fundamental wave voltage for the purpose of causing the rotating electrical machine to generate torque. This eliminates the need for a power converter, other than the inverter, for causing the field current to flow through the field winding, thereby simplifying the rotating electrical machine system.

The excitation reducing unit performs the excitation reduction control for decreasing the excitation voltage component which serves to cause the field current to flow through the field winding. Therefore, when it is necessary to suppress the output voltage of the inverter, the output voltage from the inverter can be suppressed by the excitation reducing unit executing the excitation reduction control. Further, the field weakening unit performs the field weakening control for controlling the phase of the fundamental wave current flowing through the stator winding so as to generate a magnetic flux in a direction opposite to a magnetic flux generated by the field winding. Therefore, when it is necessary to suppress the output voltage of the inverter, the output voltage of the inverter can be suppressed by the field weakening unit executing the field weakening control.

The inventor of the present disclosure has focused on the fact that, given that the rotating electrical machine outputs the same torque in the excitation reduction control and the field weakening control, which of the output voltage from the inverter during the excitation reduction control and the output voltage from the inverter during the field weakening control is higher changes depending on an operating region of the rotating electrical machine. For example, in a high-load region of the rotating electrical machine, given that the rotating electrical machine outputs the same torque in the excitation reduction control and the field weakening control, the output voltage from the inverter during the field weakening control becomes lower than the output voltage from the inverter during the excitation reduction control. Then, the control changing unit changes whether the excitation reduction control by the excitation reducing unit and/or the field weakening control by the field weakening unit is should be executed according to the operating region of the rotating electrical machine to reduce the output voltage from the inverter. Therefore, it is possible to selectively use the excitation reduction control and the field weakening control according to the operating region of the rotating electrical machine, thereby suppressing the output voltage from the inverter.

According to a second aspect of this disclosure in order to solve the above problem, there is provided a control program that is applied to a rotating electrical machine system comprising: a rotating electrical machine having a stator including a stator winding and a rotor including a field winding; and an inverter electrically connected to the stator winding, the rotating electrical machine being configured such that a field current flows through the field winding by a voltage induced in the field winding as a result of a high-frequency voltage being applied to the stator winding. The control program causes a computer to execute: (a) a process of performing switching control for the inverter so as to apply to the stator winding a composite voltage of the high-frequency voltage and a fundamental wave voltage having a frequency different from a frequency of the high-frequency voltage; (b) a process of performing excitation reduction control for reducing, from a current level, an excitation voltage component that is one of voltage components included in the composite voltage and that causes the field current to flow through the field winding; (c) a process of performing field-weakening control for controlling a phase of a fundamental wave current flowing through the stator winding by the fundamental wave voltage so as to generate a magnetic flux in a direction opposite to a magnetic flux generated by the field winding; and (d) a process of changing whether the excitation reduction control and/or the field-weakening control are to be executed, in accordance with an operating region of the rotating electrical machine such that an output voltage from the inverter is suppressed.

The above program is, as described above, executed for the rotating electrical machine, thereby offering the same operational effects as those in the first aspect.

According to a third aspect of this disclosure in order to solve the above problem, there is provided a rotating electrical machine system comprising: a rotating electrical machine having a stator including a stator winding and a rotor including a field winding; an inverter electrically connected to the stator winding; and a control device for the rotating electrical machine. The rotating electrical machine is configured such that a field current flows through the field winding by a voltage induced in the field winding as a result of a high-frequency voltage being applied to the stator winding. The control device comprises: (a) a switch controller configured to perform switching control for the inverter so as to apply to the stator winding a composite voltage of the high-frequency voltage and a fundamental wave voltage having a frequency different from a frequency of the high-frequency voltage; (b) an excitation reducing unit configured to perform excitation reduction control for reducing, from a current level, an excitation voltage component that is one of voltage components included in the composite voltage and that causes the field current to flow through the field winding; (c) a field-weakening unit configured to perform field-weakening control for adjusting a phase of a fundamental wave current flowing through the stator winding by the fundamental wave voltage so as to generate a magnetic flux in a direction opposite to a magnetic flux generated by the field winding; and (d) a control changing unit configured to change whether the excitation reduction control by the excitation reducing unit and/or the field-weakening control by the field-weakening unit are to be executed, in accordance with an operating region of the rotary electric machine to suppress an output voltage from the inverter.

The above-described structure offers the same operational effects as those in the first aspect.

### BRIEF DESCRIPTION OF THE DRAWINGS

The present disclosure will be understood more fully from the detailed description given hereinbelow and from the accompanying drawings of the preferred embodiments.

In the drawings:
Fig. 1 is an overall configuration diagram of a rotating electrical machine system;
Fig. 2 is a diagram showing an inverter and its peripheral configuration;
Fig. 3 is a cross-sectional view of a rotor and a stator;
Fig. 4 is a diagram showing an electric circuit provided in a rotor;
Fig. 5 is a block diagram of torque control processing by a control device;
Fig. 6(a) is a diagram showing a fundamental wave current;
Fig. 6(b) is a diagram showing a high-frequency current (i.e., harmonic current);
Fig. 7 is a diagram showing an operating region of a rotating electrical machine;
Fig. 8 is a block diagram showing calculation processing of a *d*-axis high-frequency command current by a control device;
Fig. 9 is a flowchart showing a procedure of a calculation processing of a *d*-axis high-frequency command current;
Fig. 10 is a diagram showing a voltage difference between a voltage during the excitation reduction control and a voltage during field weakening control;
Fig. 11 is a block diagram showing calculation processing of a *d*-axis high-frequency command current according to the second embodiment;
Fig. 12 is a block diagram of torque control processing according to the third embodiment;
Fig. 13 is a block diagram showing calculation processing of an inductance decreasing current;
Fig. 14 is a flowchart showing a procedure of a calculation processing of an inductance decreasing current;
Fig. 15 is a diagram showing a modification example of a difference between a voltage during excitation reduction control and voltage during field weakening control;
Fig. 16 is a diagram showing an example in which phases of a fundamental wave current and a high-frequency current are changed; and
Fig. 17 is a diagram showing a relationship between a phase of an output voltage vector and an excitation voltage.

### MODES FOR CARRYING OUT THE INVENTION

Embodiments will be described with reference to the drawings. In the embodiments, the functionally and/or structurally corresponding portions and/or the associated portions may be denoted by the same reference signs or by reference signs whose hundreds digit is different. For the corresponding portions and/or the associated portions, the description of other embodiments will be referred to.

### FIRST EMBODIMENT

The first embodiment embodying a rotating electrical machine system and a control apparatus for a rotating electrical machine according to the present disclosure will be described with reference to the drawings. The rotating electrical machine system is mounted on, for example, a vehicle. The rotating electrical machine is a traveling power source of the vehicle.

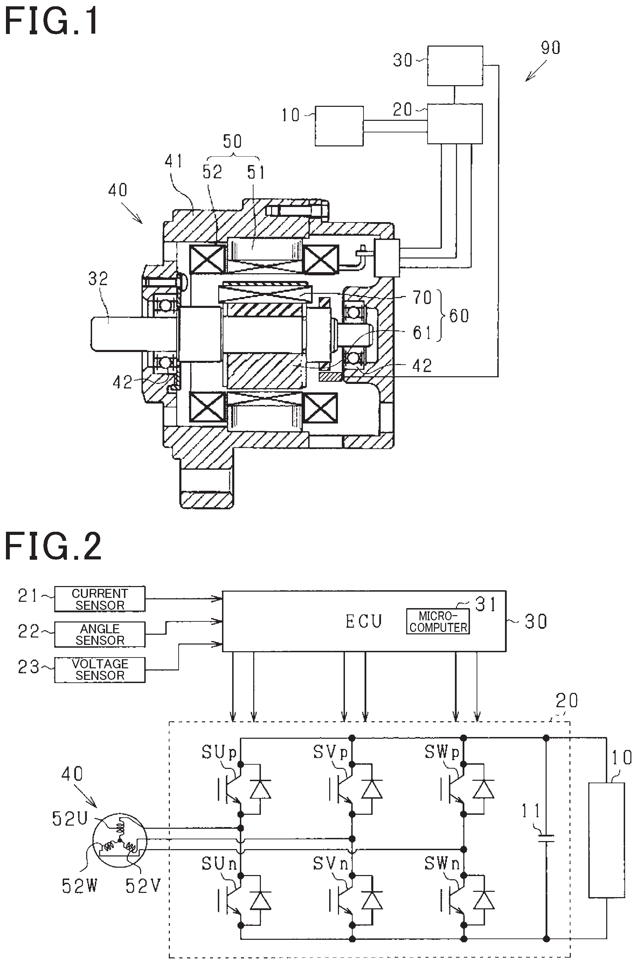

As shown in Fig. 1, the rotating electrical machine system 90 includes the DC power source 10, the inverter 20, the control device 30, and the rotating electrical machine 40. The rotating electrical machine 40 is a self-excited field winding type synchronous machine. For example, the rotating electrical machine 40, the inverter 20, and the control device 30 may constitute an electromechanical integrated drive unit, or each of the rotating electrical machine 40, the inverter 20, and the control device 30 may be configured as an individual component.

The rotating electrical machine 40 includes the housing 41, the stator 50, and the rotor 60. The stator 50 and the rotor 60 are disposed in the housing 41. The rotating electrical machine 40 of the present embodiment is an inner-rotor type rotating electrical machine in which the rotor 60 is disposed radially inside the stator 50.

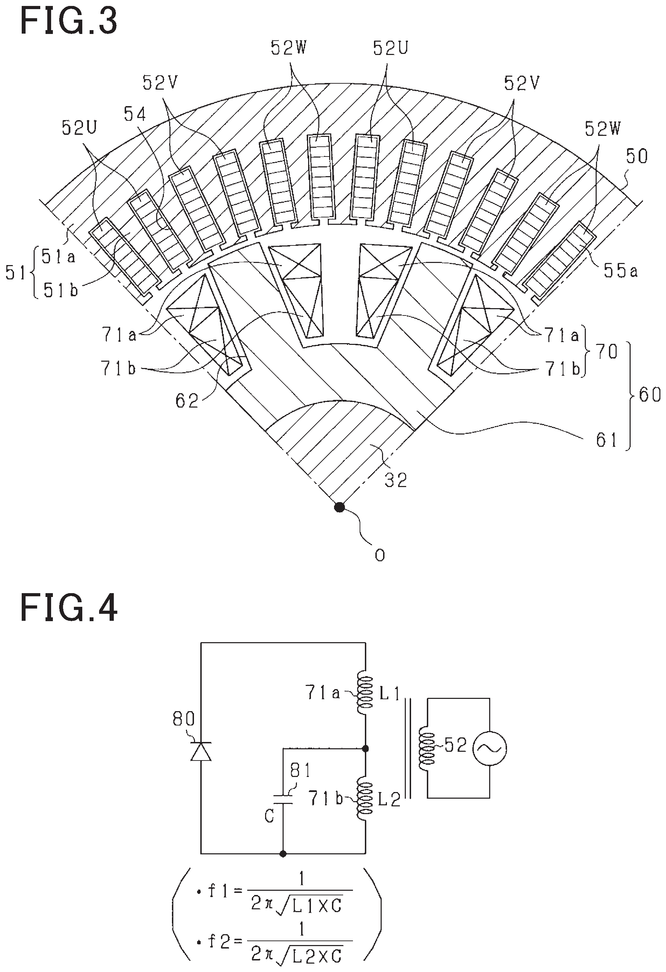

The stator 50 includes the stator core 51 and the stator winding 52. The stator winding 52 is made of, for example, a copper wire, and includes the U, V, and W-phase windings 52U, 52V, and 52W arranged to be shifted from each other by 120 degrees in electrical angle (see Fig. 3).

The rotor 60 includes the rotor core 61 and the field winding 70. The field winding 70 is made of, for example, aluminum wire, copper wire, or CNT (i.e., carbon nanotube). The rotating shaft 32 is inserted through a center hole of the rotor core 61. The rotating shaft 32 is rotatably supported by the housing 41 using the bearings 42.

The inverter 20 (i.e., a power converter), as illustrated in Fig. 2, includes series-connected assemblies of U, V, and W-phase upper arm switches SUp, SVp, and SWp and U, V, and W-phase lower arm switches SUn, SVn, and SWn. The U, V, and W-phase windings 52U, 52V, and 52W have first ends connected to connection points between the U, V, and W-phase upper arm switches SUp, SVp, and SWp and the U, V, and W-phase lower arm switches SUn, SVn, and SWn. The U, V, and W-phase windings 52U, 52V, and 52W also have second ends connected together at a neutral point. In other words, the U, V, and W-phase windings 52U, 52V, and 52W are star-connected. In the present embodiment, each of the switches SUp to SWn is made of an IGBT. A freewheel diode is connected in anti-parallel to each of the switches SUp to SWn.

The positive terminal of the DC power source 10 is connected to collectors of the U, V, and W-phase upper arm switches SUp, SVp, and SWp. The negative terminal of the DC power source 10 is connected to emitters of the U, V, and W-phase lower arm switches SUn, SVn, and SWn. The smoothing capacitor 11 is connected in parallel to the DC power source 10.

Subsequently, the stator 50 and the rotor 60 will be described below with reference to Fig. 3.

The stator 50 and the rotor 60 are both arranged coaxially with the rotating shaft 32 (specifically, with the rotation center axis *O* as a common axis). In the following description, a direction in which the rotating shaft 32 extends is referred to as an axial direction, a direction extending radially from the center of the rotating shaft 32 is referred to as a radial direction, and a direction extending circumferentially around the rotating shaft 32 is referred to as a circumferential direction.

The stator 50 is made of a stack of steel plates formed of a soft magnetic material, and includes the annular back yoke 51a and teeth 51b protruding radially inward from the back yoke 51a. The stator 50 has a plurality of slots 54 each of which is formed between a respective adjacent two of the teeth 51b. The slots 54 are arranged away from each other in the circumferential direction. The stator winding 52 is made of phase windings which are disposed in a predetermined order in the respective slots 54.

The rotor 60 is made of a soft magnetic material and is composed of, for example, a stack of steel plates. The rotor 60 includes the rotor core 61 which has a cylindrical shape. The rotor 60 also includes a plurality of main poles 62 protruding radially outward from the rotor core 61. In the present embodiment, the eight main poles 62 are arranged at equal intervals away from each other in the circumferential direction.

The field winding 70 includes the first winding portion 71a and the second winding portion 71b. The first winding portion 71a is wound on a radially outer portion of each of the main poles 62, while the second winding portion 71b is wound around a radially inner portion of a corresponding one of the main poles 62 on a radially inner side of the first winding portion 71a. Winding directions in which the first winding portion 71a and the second winding portion 71b are wound around each of the main poles 62 are identical with each other. Here, a respective two of the main poles 62 which are arranged adjacent to each other in the circumferential direction are defined as including a first main pole 62 and a second main pole 62. The winding direction of the winding portion 71a and 71b wound around the first main pole 62 is opposite to the winding direction of the winding portions 71a and 71b wound around the second main pole 62. This causes the magnetization directions of the main poles 62 adjacent to each other in the circumferential direction to be opposite to each other.

Fig. 4 shows an electrical circuit in the rotor including the first winding portion 71a and the second winding portion 71b wound around each of the main poles 62. The first winding portion 71a illustrated in Fig. 4 is one of the first winding portions 71a wound around the main poles 61 in the form of a series-connected assembly. Similarly, the second winding portion 71b illustrated in Fig. 4 is one of the second winding portions 71b wound around the main poles 61 in the form of a series-connected assembly.

The rotor 60 is provided with the diodes 80 working as rectifying devices and the capacitors 81. Each of the diodes 80 is electrically connected in parallel to a series-connected assembly of the first winding portion 71a and the second winding portion 71b. Specifically, a first end of the first winding portion 71a is connected to a cathode of the diode 80, and a first end of the second winding portion 71b is connected to a second end of the first winding portion 71a. An anode of the diode 80 is connected to a second end of the second winding portion 71b. The capacitor 81 is electrically connected in parallel to the second winding portion 71b. In Fig. 4, *L1* indicates an inductance of the first winding portion 71a, *L2* indicates an inductance of the second winding portion 71b, and *C* indicates a capacitance of the capacitor 81.

The first winding portion 71a and the capacitor 81 constitutes a series-connected resonant circuit. Additionally, the second winding portion 71b and the capacitor 81 constitutes a parallel-connected resonant circuit. In Fig. 4, *f1* indicates a first resonant frequency that is a resonant frequency of the series-connected resonant circuit, and *f2* indicates a second resonant frequency that is a resonant frequency of the parallel-connected resonant circuit.

Note that the anode of the diode 80 may be connected to the first end of the first winding portion 71a, and the cathode of the diode 80 may be connected to the second end of the second winding portion 71b.

Returning to Fig. 2, the rotating electrical machine system 90 also includes the current sensor 21, the angle sensor 22, and the voltage sensor 23. The current sensor 21 measures currents of at least two phases among respective phase currents flowing through the rotating electrical machine 40. The angle sensor 22 measures a rotation angle (i.e., an electrical angle) of the rotor 60. In the present embodiment, the voltage sensor 23 includes a sensor that measures a voltage developed at the DC power supply 10 and a sensor that measures an output voltage (i.e., a phase voltage) of each phase of the inverter 20. Values measured by the sensors 21 to 23 are input to the control device 30.

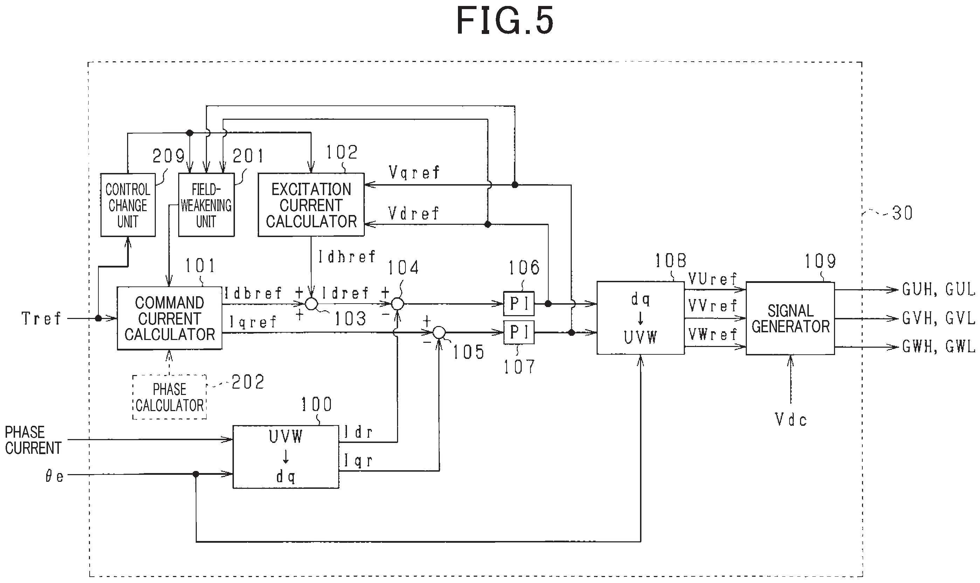

The control device 30 working as a controller for the rotating electrical machine 40 is made of an electronic control unit (ECU) mainly composed of the microcomputer 31. The microcomputer 31 includes a central processing unit (CPU). Functions provided by the microcomputer 31 can be provided by software recorded in a physical memory device and a computer executing the software, only software, only hardware, or a combination thereof. For example, when the microcomputer 31 is provided by an electronic circuit that is hardware, the microcomputer 31 can be provided by a digital circuit including a large number of logic circuits, or an analog circuit. For example, the microcomputer 31 executes a program stored in a non-transitory tangible storage medium as a storage unit provided in the microcomputer 31. The program (i.e., a control program) includes, for example, programs for processes shown in Fig. 5, Fig. 7, Fig. 8, and the like, which will be described later in detail. By executing a set of instructions constituting the program, a method corresponding to the program is executed. The storage unit is, for example, a non-volatile memory. Note that the program stored in the storage unit can be updated via a communication network such as the Internet, for example, by OTA (Over The Air) or the like.

The control device 30 generates drive signals for turning on or off the upper and lower arm switches SUp to SWn of the inverter 20. Specifically, the control device 30 generates and outputs drive signals to the gates of the respective upper and lower arm switches SUp to SWn so as to convert DC power output from the DC power supply 10 into AC power and supply the AC power to U, V, and W-phase windings 52U, 52V, and 52W. This causes, in each phase, an upper arm switch and a lower arm switch to be alternately turned on while interposing a dead time.

The control device 30 works to turn on or off the respective switches SUp to SWn so as to cause a composite current of a fundamental wave current and a harmonic current (specifically, a harmonic excitation current) having a frequency higher than a frequency of the fundamental wave current to flow through the respective phase windings 52U, 52V, and 52W. The fundamental wave current is a current mainly for causing the rotating electrical machine 40 to generate torque. The harmonic current is a current mainly for exciting the field winding 70 to induce a field current in the field winding 70. Phase currents flowing through the respective phase windings 52U, 52V, and 52W are shifted from each other by 120 degrees in electrical angle.

A description will be given of torque control of the rotating electrical machine 40 executed by the control device 30 with reference to Fig. 5.

The control device 30 includes the two-phase conversion unit 100 that works to convert U, V, and W-phase currents in a three-phase fixed coordinate system into a *d-*axis current Idr and a *q*-axis current Iqr in a two-phase rotating coordinate system (i.e., a *d-q* coordinate system), based on a value measured by the current sensor 21 and an electrical angle θe measured by the angle sensor 22.

The command current calculator 101 calculates a *d*-axis basic command current Idbref and a *q*-axis command current Iqref based on the command torque Tref. The *d*-axis basic command current Idbref and the *q*-axis command current Iqref are target values of DC components corresponding to a fundamental wave current. The command current calculator 101 may calculate the *d*-axis basic command current Idbref and the *q*-axis command current Iqref based on, for example, the command torque Tref inputted thereto and map information in which the command torque Tref, the *d*-axis basic command current Idbref, and the *q*-axis command current Iqref are associated with each other. Note that a command for the field-weakening control which is outputted from the field-weakening unit 201 to the command current calculator 101 will be described later.

The excitation current calculator 102 calculates a *d*-axis high-frequency command current Idhref. The *d*-axis high-frequency command current Idhref is a command value of an AC component corresponding to a harmonic current for exciting the field winding 70, and is represented by the following equation *Eq.1* in the present embodiment. In the following equation *Eq.1*, Idamp is an amplitude of the *d*-axis high-frequency command current Idhref, and fh is a fluctuation frequency of the *d*-axis high-frequency command current Idhref. Note that the excitation current calculator 102 may calculate the amplitude Idamp of the *d*-axis high-frequency command current Idhref such that the amplitude of the harmonic current is, for example, 3% or more of the amplitude of the fundamental wave current.${I}_{dhref} = {I}_{damp} ⋅ sin \left(2π⋅{f}_{h}⋅t\right)$ Eq. 1

The current adder 103 calculates the *d*-axis command current Idref by adding the *d*-axis high-frequency command current Idhref to the *d*-axis basic command current Idbref.

The *d*-axis deviation calculator 104 calculates a *d*-axis current deviation ΔId by subtracting the d-axis current Idr from the d-axis command current Idref. The q-axis deviation calculator 105 calculates a q-axis current deviation ΔIq by subtracting the q-axis current Iqr from the q-axis command current Iqref.

The d-axis current controller 106 calculates the d-axis voltage command value Vdref as a manipulated variable for feedback-controlling the d-axis current Idr to the d-axis command current Idref based on the d-axis current deviation ΔId. The q-axis current controller 107 calculates the q-axis voltage command value Vqref as a manipulated variable for feedback-controlling the q-axis current Iqr to the q-axis command current Iqref based on the q-axis current deviation ΔIq. In the present embodiment, the feedback control of each of the current controllers 106 and 107 is proportional-integral control.

The three-phase converter 108 converts the d- and q-axis voltage command values Vdref and Vqref in the two-phase rotating coordinate system into U, V, and W-phase voltage command values VUref, VVref, and VWref in the three-phase fixed coordinate system based on the d- and q-axis voltage command values Vdref and Vqref and the electrical angle θe. The U, V, and W-phase voltage command values VUref, VVref, and VWref have waveforms whose phases are shifted from each other by 120 degrees in electrical angle. Frequencies of harmonic components included in the U, V, and W-phase voltage command values VUref, VVref, and VWref are set to frequencies in the vicinity of the first resonant frequency f1. Note that the U, V, and W-phase voltage command values VUref, VVref, and VWref are composite voltages of a fundamental wave voltage corresponding to the fundamental wave current and a harmonic voltage corresponding to the harmonic current.

The signal generator 109 generates, in response to the U, V, and W-phase voltage command values VUref, VVref, and VWref, the drive signals GUH to GWL for the upper and lower arm switches SUp to SWn of the U, V, and W-phases for causing the composite current to flow through the stator winding 52. The generated drive signals GUH to GWL are then input to the gates of the respective switches. This executes switching control of the inverter 20. The signal generator 109 functions as a switch controller.

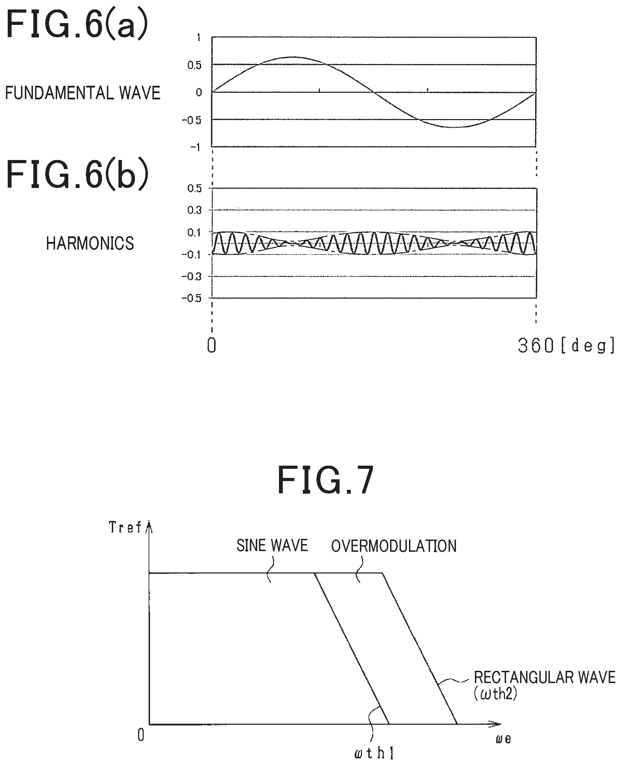

The switching control of the inverter 20 causes the composite current, in which the harmonic current (refer to the solid line in Fig. 6(b)) is superimposed on the fundamental wave current (refer to Fig. 6(a)), to flow through each of the phase windings 52U, 52V, and 52W. The harmonic current flowing through the stator winding 52 results in flow of a field current through the field winding 70. Fig. 6(a) shows the transition of the fundamental wave current in one electrical angle cycle. The dot-dash line in Fig. 6(b) represents the envelope of the harmonic current. The envelope of the harmonic current has the same cycle as the fundamental wave current. The phase of the harmonic current with respect to the fundamental wave current is a phase at which the field current can be caused to flow through the field winding 70 with the highest efficiency by the harmonic current (i.e., a phase at which the field current becomes maximum when compared with high-frequency currents of the same magnitude). The values labeled on the vertical axes shown in Figs. 6(a) and 6(b) indicate the relative relationship between the magnitudes of the waves shown in Fig. 6(a) and Fig. 6(b).

The operating region of the rotating electrical machine 40 is, as demonstrated in Fig. 7, represented by the command torque Tref and the electrical angular velocity ωe of the rotor 60 (or the rotational speed of the rotor 60). The operating region is classified into a sine wave PWM control region, an overmodulation control region, or a rectangular wave control region. The overmodulation control region is a region adjacent to the high-speed side of the sine wave PWM control region.

When the control device 30 determines that the electrical angular velocity ωe calculated as a function of the electrical angle θe is less than the first speed threshold ωth1, the control device 30 performs sine wave PWM control. The sine wave PWM control is switching control of the upper and lower arm switches SUp to SWn for making each phase voltage applied to the stator winding 52 into a PWM voltage waveform in a case where a peak value of each phase voltage applied to the stator winding 52 is equal to or less than the terminal voltage appearing at the DC power supply 10. The first speed threshold ωth1 is selected to decrease as the command torque Tref increases.

When determining that that the electrical angular velocity ωe is equal to or greater than the first speed threshold ωth1 and less than the second speed threshold ωth2, the control device 30 performs overmodulation control. The overmodulation control is switching control of the upper and lower arm switches SUp to SWn for making each phase voltage applied to the stator winding 52 into a PWM voltage waveform having a modulation rate higher than that of a PWM voltage waveform by the sine wave PWM control in a case where a peak value of each phase voltage applied to the stator winding 52 exceeds the terminal voltage of the DC power supply 10. The second speed threshold ωth2 decreases as the command torque Tref increases.

Note that the control device 30 may determine whether the current operating point lies in the overmodulation control region or the rectangular wave control region using the magnitude of the output voltage vector of the inverter 20, instead of the determination using the first speed threshold ωth1 and the second speed threshold ωth2 as described above.

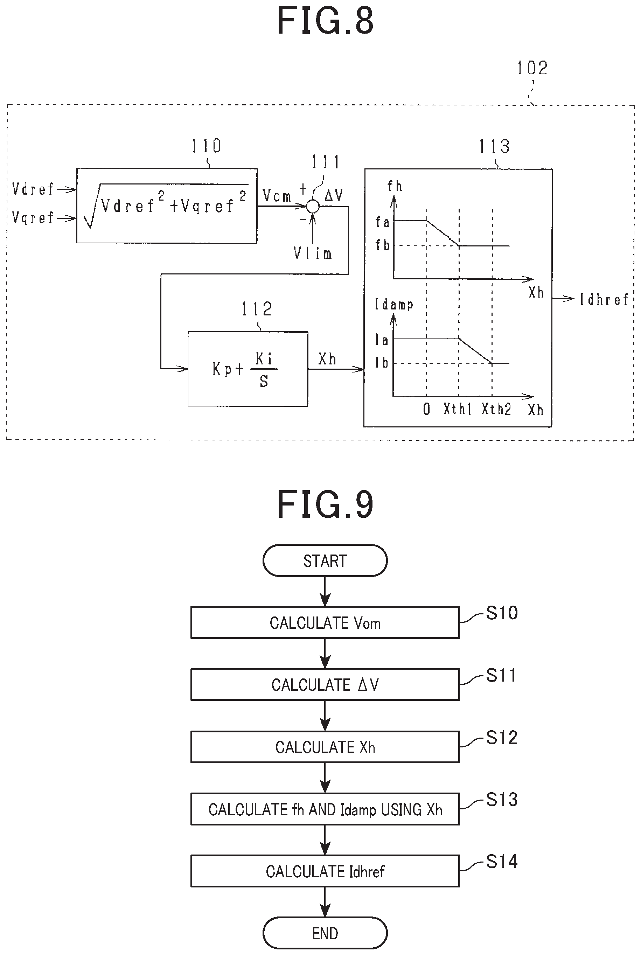

When determining that the operating point lies in the overmodulation control region or the rectangular wave control region (i.e., when the rotational speed of the rotor 60 of the rotating electrical machine 40 is higher than the predetermined rotational speed), the control device 30 performs excitation reduction control to reduce an excitation voltage component that is one of components of voltage which functions to cause the field current to flow through the field winding 70. The excitation reduction control is control for reducing magnetic flux generated by the field winding 70 of the rotor 60 from current magnetic flux. Hereinafter, the excitation reduction control will be described using a block diagram of the excitation current calculator 102 shown in Fig. 8.

The excitation current calculator 102 functions as an excitation reduction unit and includes the voltage amplitude calculator 110, the voltage deviation calculator 111, and the feedback controller 112. The voltage amplitude calculator 110 works to calculate the voltage amplitude Vom, which is the magnitude of the output voltage vector of the inverter 20 in a two-phase rotating coordinate system, based on the *d-*axis voltage command value Vdref calculated by the *d*-axis current controller 106 and the *q*-axis voltage command value Vqref calculated by the *q*-axis current controller 107. Specifically, the voltage amplitude calculator 110 calculates the voltage amplitude Vom according to the following equation *Eq2*.${V}_{om} = \sqrt{{V}_{dref}^{2} + {V}_{qref}^{2}}$ Eq. 2

The voltage deviation calculator 111 calculates the voltage deviation ΔV by subtracting the limit value Vlim from the calculated voltage amplitude Vom. The limit value Vlim (i.e., a voltage limit value) is a value set to avoid an induced voltage generated in the stator winding 52 from becoming equal to or greater than the terminal voltage of the DC power supply 10. For example, the voltage deviation calculation unit 111 may set the limit value Vlim higher as the terminal voltage at the DC power supply 10 measured by the voltage sensor 23 (hereinafter, the power supply voltage Vdc) is higher.

The feedback controller 112 calculates the deviation amount Xh, which is a manipulated variable for performing feedback control of the calculated voltage deviation ΔV to zero. In the present embodiment, the feedback control used in the feedback control unit 112 is proportional-integral control.

The excitation current calculator 102 includes the excitation parameter calculator 113. The excitation parameter calculator 113 calculates the amplitude Idamp and the fluctuation frequency fh of the *d*-axis high-frequency command current Idhref based on the calculated deviation amount Xh. The excitation parameter calculator 113 reduces the excitation voltage component for the field winding 70 which is one of voltage components included in the composite voltage by reducing the amplitude Idamp or lowering the fluctuation frequency fh. This results in a decrease in magnetic flux generated by the rotor 60 and performs the excitation reduction control. Hereinafter, the reason why the excitation voltage component is reduced by reducing the amplitude Idamp or lowering the fluctuation frequency fh will be described.

The following equations *Eq.3* and *Eq.4* represent voltage equations of an electrical motor in a two-phase rotating coordinate system. In the following equations *Eq.3* and *Eq.4,* R is a resistance value of the stator winding 52, *Ld* and *Lq* are d- and q-axis inductances, and *φ* is an effective value of linkage flux in the stator winding 52.${V}_{d} = R ⋅ {I}_{d} + {L}_{d} ⋅ \frac{d}{dt} {I}_{d} - {ω}_{e} ⋅ {l}_{q} ⋅ {I}_{q}$ Eq. 3

[ 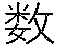 4]

By substituting *"Id = Idbref + Idhref"* into the above *Eq.3* and *Eq.4,* the following equations *Eq.5* and *Eq.6* are derived.$\begin{matrix}{V}_{d} = \left(R⋅{I}_{dbref}-{ω}_{e}⋅{L}_{q}⋅{I}_{q}\right) \\ + \left\{\begin{matrix}R ⋅ {I}_{damp} \\ ⋅ sin \left(2π⋅{f}_{h}⋅t\right) + 2 π ⋅ {f}_{h} ⋅ {L}_{d} ⋅ {I}_{damp} ⋅ cos \left(2π⋅{f}_{h}⋅t\right)\end{matrix}\right\}\end{matrix}$ Eq. 5 $\begin{matrix}{V}_{q} = \left(R⋅{I}_{q}+{L}_{q}⋅\frac{d}{dt}{I}_{q}+{ω}_{e}⋅{L}_{d}⋅{I}_{dbref}+{ω}_{e}⋅φ\right) \\ + \left\{{ω}_{e}⋅{L}_{d}⋅{I}_{damp}⋅sin\left(2π⋅{f}_{h}⋅t\right)\right\}\end{matrix}$

The terms enclosed in braces (i.e., curly brackets) on the right-hand sides in the above equations (Eq. 5) and (Eq. 6) are the excitation voltage components. Accordingly, the excitation voltage component becomes larger as the amplitude Idamp of the d-axis high-frequency command current Idhref is larger, and becomes larger as the fluctuation frequency fh is higher. As the excitation voltage component is larger, the field current flowing through the field winding 70 becomes larger, and consequently, the magnetic flux generated by the field winding 70 becomes larger.

First, describing a method for calculating the fluctuation frequency fh, the excitation parameter calculator 113 sets the fluctuation frequency fh to a first frequency fa when the deviation amount Xh is equal to or less than 0. When the deviation amount Xh is greater than 0 and less than a first threshold Xth1, the excitation parameter calculator 113 sets the fluctuation frequency fh to a frequency that is lower than the first frequency fa and higher than a second frequency fb (< fa), and that becomes lower as the deviation amount Xh becomes larger. When the deviation amount Xh is equal to or greater than the first threshold Xth1, the excitation parameter calculator 113 sets the fluctuation frequency fh to the second frequency fb. In other words, the excitation parameter calculator 113 lowers the fluctuation frequency fh of the *d*-axis high-frequency command current Idhref from the current fluctuation frequency fh when the deviation amount Xh increases.

Next, describing a method for calculating the amplitude Idamp, the excitation parameter calculator 113 sets the amplitude Idamp to a first amplitude Ia when the deviation amount Xh is equal to or less than the first threshold Xth1. Alternatively, when the deviation amount Xh is greater than the first threshold Xth1 and less than a second threshold Xth2 (> Xth1), the excitation parameter calculator 113 sets the amplitude Idamp to an amplitude that is smaller than the first amplitude Ia and larger than a second amplitude Ib (< Ia), and that becomes smaller as the deviation amount Xh becomes larger. When the deviation amount Xh is equal to or greater than the second threshold Xth2, the excitation parameter calculator 113 sets the amplitude Idamp to the second amplitude Ib. In other words, the excitation parameter calculator 113 reduces the amplitude Idamp of the *d*-axis high-frequency command current Idhref from the current amplitude Idamp when the deviation amount Xh increases.

When the amplitude Idamp is reduced, it will cause a drop in torque produced by the rotating electrical machine 40 to increase. For this reason, in this embodiment, the deviation amount Xh at which the lowering of the fluctuation frequency fh is started is set smaller than the deviation amount Xh at which the reduction of the amplitude Idamp is started. Accordingly, prior to the reduction process of the amplitude Idamp, the magnetic flux of the rotor 60 is reduced by the lowering process of the fluctuation frequency fh. This results in a reduction in the field current while suppressing the torque reduction.

Particularly in the present embodiment, when the deviation amount Xh exceeds the first threshold Xth1, which is the deviation amount Xh at which the lowering of the fluctuation frequency fh is completed, the reduction of the amplitude Idamp is started. In other words, the reduction process of the amplitude Idamp is started when the deviation amount Xh does not become equal to or less than 0 even by the lowering process of the fluctuation frequency fh. This enables the field current to be reduced while suitably suppressing the torque reduction.

In the above-described way, the excitation current calculator 102 control or adjusts the d-axis high-frequency command current Idhref, thereby adjusting or reducing the excitation voltage component.

Fig. 9 is a flowchart of an excitation reduction control program executed by the control device 30. This program is executed at a given control cycle.

After entering the program, the routine proceeds to step S10 wherein the voltage amplitude calculator 110 calculates the voltage amplitude Vom using the *d*- and *q*-axis voltage command values Vdref and Vqref.

The routine proceeds to step S11 wherein the voltage deviation calculator 111 calculates the voltage deviation ΔV using the calculated voltage amplitude Vom.

The routine proceeds to step S12 wherein the feedback controller 112 calculates the deviation amount Xh as a function of the calculated voltage deviation ΔV.

The routine proceeds to step S13 wherein the excitation parameter calculator 113 calculates the fluctuation frequency fh and the amplitude Idamp of the *d*-axis high-frequency command current Idhref based on the calculated deviation amount Xh.

The routine proceeds to step S14 wherein the *d*-axis high-frequency command current Idhref which is determined as a function of the calculated fluctuation frequency fh and the calculated amplitude Idamp is calculated. The calculated d-axis high-frequency command current Idhref is output to the current adder 103. The routine then terminates.

As shown in Fig. 5, the control device 30 includes the field-weakening unit 201. When the voltage amplitude Vom is larger than the limit value Vlim (or when the rotational speed of the rotor 60 is higher than a predetermined rotational speed), the field-weakening unit 201 executes field-weakening control for causing a negative *d*-axis current to flow through the stator winding 52 so that the stator winding 52 generates a magnetic flux in a direction opposite to a magnetic flux generated by the field winding 70. Specifically, the field-weakening unit 201 transmits a command for the field-weakening control to the command current calculator 101, and causes the command current calculator 101 to calculate the *d*-axis basic command current Idbref so that the negative *d*-axis current flows through the stator winding 52. This causes the phase of the fundamental wave current flowing through the stator winding 52 to be adjusted by the fundamental wave voltage, so that the stator winding 52 generates the magnetic flux in the direction opposite to the magnetic flux generated by the field winding 70. Note that the predetermined rotational speed is a rotational speed at which the voltage amplitude Vom becomes larger than the limit value Vlim, and may be derived in advance based on an experiment or the like.

The control device 30 includes the control changing unit 209. The control changing unit 209 changes whether excitation reduction control by the excitation current calculator 102 and/or field-weakening control by the field-weakening unit 201 are to be executed in accordance with the operating region of the rotating electrical machine 40 to suppress the output voltage from the inverter 20. In the present embodiment, the control changing unit 209 is designed to cause only one of the excitation reduction control by the excitation current calculator 102 and the field-weakening control by the field-weakening unit 201 to be executed.

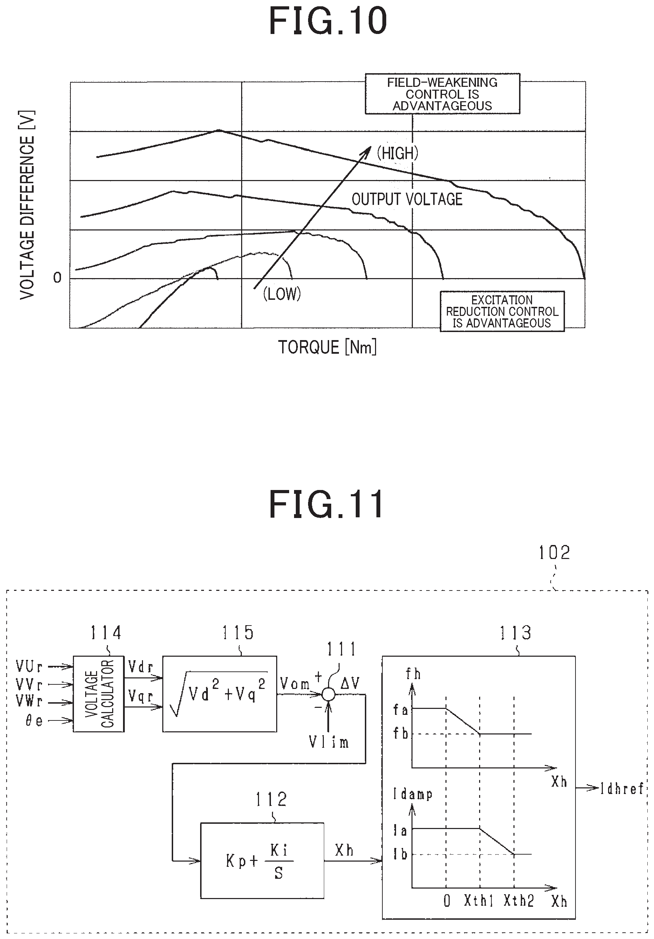

Fig. 10 is a diagram showing a voltage difference between the excitation reduction control mode and the field-weakening control mode established by the control device 30. The voltage difference is given by a difference obtained by subtracting the output voltage of the inverter 20 (i.e., the voltage amplitude Vom) in the field-weakening control mode from the output voltage of the inverter 20 (i.e., the voltage amplitude Vom) in the excitation reduction control mode under a condition where the rotating electrical machine 40 outputs the same torque at the same rotational speed in the excitation reduction control mode and the field-weakening control mode. The voltage difference between the output voltage in the excitation reduction control mode and the output voltage in the field-weakening control mode is calculated using only a DC component (i.e., a fundamental wave voltage) of the output voltage. Note that the magnitude of the voltage difference slightly changes depending on the rotational speed of the rotating electrical machine 40, but the influence of the rotational speed is small.

In the rotating electrical machine 40 of the present embodiment, in a high torque region (i.e., a high load region), the output voltage during the field-weakening control is lower than the output voltage during the excitation reduction control, and the voltage difference is a positive value. In other words, in the high torque region, in a case where the rotating electrical machine 40 outputs the same torque in the excitation reduction control and the field-weakening control, it is advantageous to execute the field-weakening control because the output voltage can be made lower. Alternatively, in a low torque region (i.e., a low load region), when it is defined that the rotating electrical machine 40 outputs the same torque in the excitation reduction control and the field-weakening control, the output voltage during the field-weakening control is lower than the output voltage during the excitation reduction control in a case where the output voltage (i.e., a fundamental wave voltage) is larger than a predetermined value (i.e., a threshold), and the output voltage during the excitation reduction control is lower than the output voltage during the field-weakening control in a case where the output voltage is smaller than the predetermined value. Generally, in the low torque region, since the output voltage is often smaller than the predetermined value, it can be said that the output voltage during the excitation reduction control is lower than the output voltage during the field-weakening control under a condition where the rotating electrical machine 40 outputs the same torque in the excitation reduction control and the field-weakening control. Therefore, in the low torque region, in a case where the rotating electrical machine 40 outputs the same torque in the excitation reduction control and the field-weakening control, it can be said that it is advantageous to execute the excitation reduction control because the output voltage can be made lower.

Therefore, when it is required to control or suppress the output voltage from the inverter 20, the control changing unit 209 instructs the field-weakening unit 201 to execute the field-weakening control without executing the excitation reduction control by the excitation current calculator 102 in the high load region of the rotating electrical machine 40. In a case where the excitation reduction control is not executed, the excitation current calculator 102 keeps the amplitude Idamp, the fluctuation frequency fh, and the phase of the d-axis high-frequency command current Idhref constant. Specifically, as shown in Fig. 8, when the deviation amount Xh is equal to or less than 0, the fluctuation frequency fh of the *d*-axis high-frequency command current Idhref is set to the first frequency fa, the amplitude Idamp is set to the first amplitude Ia, and the phase is set to a reference phase. Further, when suppressing the output voltage from the inverter 20, the control changing unit 209 causes the excitation reduction control by the excitation current calculator 102 to be executed without causing the field-weakening control by the field-weakening unit 201 to be executed in the low load region of the rotating electrical machine 40.

The above-described embodiment offers the following beneficial advantages.

The rotating electrical machine 40 is configured such that a voltage is induced in the field winding 70 and a field current flows by applying a high-frequency voltage to the stator winding 52. Further, in addition to the fundamental wave voltage for the purpose of causing the rotating electrical machine 40 to generate torque, the signal generator 109 controls the switching operation of the inverter 20 so as to cause a high-frequency voltage, which has a higher frequency than the fundamental wave voltage, to flow through the stator winding 52. This eliminates the need for an inverter (i.e., a power converter) required to produce a flow of field current through the field winding 70, other than the inverter 20, which results in a simplified structure of the rotating electrical machine system 90.

The excitation current calculator 102 performs the excitation reduction control for reducing an excitation voltage component, which is a component for causing the field current to flow through the field winding 70 among voltage components included in the composite voltage, from a current level. Therefore, when it is required to suppress the output voltage from the inverter 20, the excitation current calculator 102 is capable of suppressing the output voltage from the inverter 20 by executing the excitation reduction control. Further, the field-weakening unit 201 performs the field-weakening control for adjusting the phase of the fundamental wave current flowing through the stator winding 52 so as to generate a magnetic flux in a direction opposite to the magnetic flux generated by the field winding 70. Therefore, when it is required to suppress the output voltage from the inverter 20, the field-weakening unit 201 is capable of suppressing the output voltage from the inverter 20 by executing the field-weakening control.

In the high-torque region (i.e., the high-load region) of the rotating electrical machine 40, an output voltage from the inverter 20 during the field-weakening control becomes lower than that from the inverter 20 during the excitation reduction control under a condition where the rotating electrical machine 40 outputs the same torque between the excitation reduction control and the field-weakening control. Then, the control changing unit 209 changes whether the excitation reduction control by the excitation current calculator 102 and/or the field-weakening control by the field-weakening unit 201 should be executed in accordance with the operating region of the rotating electrical machine 40 so that the output voltage from the inverter 20 is suppressed. This enables the excitation reduction control and the field-weakening control to be selectively used in accordance with the operating region of the rotating electrical machine 40, which suppresses the output voltage from the inverter 20.

The rotating electrical machine 40 has such a characteristic that, in the high-torque region, the output voltage from the inverter 20 during the field-weakening control becomes lower than that from the inverter 20 during the excitation reduction control under a condition where the rotating electrical machine 40 outputs the same torque between the excitation reduction control and the field-weakening control. Therefore, when suppressing the output voltage of the inverter 20, the control changing unit 209 causes the field-weakening unit 201 to execute the field-weakening control without executing the excitation reduction control by the excitation current calculator 102 in the high-torque region of the rotating electrical machine 40. Therefore, in accordance with the characteristic of the rotating electrical machine 40, the field-weakening control capable of further lowering the output voltage of the inverter 20 is executed in the high-torque region, thereby suppressing the output voltage from the inverter 20.

It can be said that the rotating electrical machine 40 has such a characteristic that, in the low-torque region, an output voltage from the inverter 20 during the excitation reduction control becomes lower than that from the inverter 20 during the field-weakening control under a condition where the rotating electrical machine 40 outputs the same torque between the excitation reduction control and the field-weakening control. Therefore, when it is required to suppress the output voltage from the inverter 20, the control changing unit 209 instructs the excitation current calculator 102 to execute the excitation reduction control without executing the field-weakening control using the field-weakening unit 201 in the low-torque region of the rotating electrical machine 40. This enables the excitation reduction control capable of further lowering the output voltage from the inverter 20 to be executed in the low-torque region in accordance with the characteristic of the rotating electrical machine 40, which suppresses the output voltage from the inverter 20.

The excitation voltage component of the composite voltage, as already described, increases as the amplitude Idamp of the *d*-axis high-frequency current flowing through the stator winding 52 increases. Therefore, in the excitation reduction control, the excitation current calculator 102 reduces the excitation voltage component by reducing the amplitude Idamp of the *d*-axis high-frequency current flowing through the stator winding 52 from a current value. The above-described configuration is, therefore, capable of reducing the excitation voltage component by utilizing a relationship between the amplitude Idamp of the *d*-axis high-frequency current flowing through the stator winding 52 and the excitation voltage component.

The excitation voltage component of the composite voltage, as described above, increases with an increase in the fluctuation frequency fh of the *d*-axis high-frequency current flowing through the stator winding 52. Therefore, in the excitation reduction control, the excitation current calculator 102 decreases the excitation voltage component by lowering the fluctuation frequency fh of the *d*-axis high-frequency current flowing through the stator winding 52 from a current value. The above-described way enables the output voltage from the inverter 20 to be suppressed while suppressing a decrease in output torque produced by the rotating electrical machine 40, compared to a case where the excitation voltage component is decreased by decreasing an amplitude Idamp of the *d*-axis high-frequency current flowing through the stator winding 52 from a current value.

When the excitation reduction control is determined not to be executed, the excitation current calculator 102 keeps the amplitude Idamp, the fluctuation frequency fh, and the phase of the *d*-axis high-frequency current flowing through the stator winding 52 constant. This enables the excitation voltage component to be made constant when the excitation reduction control is not executed.

The control changing unit 209, as described above, works to change whether the excitation reduction control by the excitation current calculator 102 and/or the field-weakening control by the field-weakening unit 201 are to be executed according to the operating region of the rotating electrical machine 40 to suppress the output voltage from the inverter 20 when the output voltage from the inverter 20 is higher than the limit value Vlim. This prevents the output voltage from the inverter 20 from becoming higher than the limit value Vlim.

Alternatively, the control changing unit 209 changes whether the excitation reduction control by the excitation current calculator 102 and/or the field-weakening control by the field-weakening unit 201 are to be executed according to the operating region of the rotating electrical machine 40 to suppress the output voltage from the inverter 20 when the rotational speed of the rotating electrical machine 40 is higher than a predetermined rotational speed. This enables the output voltage from the inverter 20 to be suppressed, and the rotational speed of the rotating electrical machine 40 to be increased above the predetermined rotational speed when the rotational speed of the rotating electrical machine 40 is higher than the predetermined rotational speed.

The excitation reduction control for reducing the magnetic flux of the rotor 60 in the high-speed region is, as described above, performed by the control device 30 that controls the degree of torque produced by the rotating electrical machine 40. Therefore, the excitation reduction control and the torque control are achieved by the switching control for the inverter 20 used therefor. This also contributes to simplification of the rotating electrical machine system 90. Furthermore, the excitation voltage component is reduced by the switching control for the inverter 20, thereby achieving a quick reduction in the output voltage from the inverter 20.

### MODIFICATIONS OF THE FIRST EMBODIMENT

The excitation parameter calculator 113 may make only one of the varying frequency fh and the amplitude Idamp, namely, the varying frequency fh, variable as a function of the deviation amount Xh.

Alternatively, the excitation parameter calculator 113 may make only one of the varying frequency fh and the amplitude Idamp variable, namely, the amplitude Idamp, as a function of the deviation amount Xh. In this case, the excitation parameter calculator 113 may start decreasing the amplitude Idamp when the deviation amount Xh exceeds 0, similarly to the manner of decreasing the varying frequency fh.

### SECOND EMBODIMENT

The second embodiment will be described below with reference to the drawings, focusing on differences from the first embodiment. In the second embodiment, instead of the d-axis voltage command value Vdref and the q-axis voltage command value Vqref, the U-phase voltage VUr, the V-phase voltage VVr, and the W-phase voltage VWr measured by the voltage sensor 23 are used to calculate the voltage amplitude Vom.

Fig. 11 is a block diagram of the excitation current calculator 102.

In the excitation current calculator 102, the voltage calculator 114 calculates the d-axis voltage Vdr and the q-axis voltage Vqr using the U-phase voltage VUr, the V-phase voltage VVr, and the W-phase voltage VWr measured by the voltage sensor 23 and the electrical angle θe. Specifically, the voltage calculator 114 calculates the d-axis voltage Vdr and the q-axis voltage Vqr based on the following equations *Eq.7* and *Eq.8.*${V}_{dr} = \sqrt{\frac{2}{3}} \left\{VUr\times {cosθ}_{e}+VVr\times cos\left({θ}_{e}-\frac{2}{3}π\right)+VWr\times cos\left({θ}_{e}+\frac{2}{3}π\right)\right\}$ Eq. 7 ${V}_{qr} = \sqrt{\frac{2}{3}} \left\{VUr\times {sinθ}_{e}+VVr\times sin\left({θ}_{e}-\frac{2}{3}π\right)+VWr\times sin\left({θ}_{e}+\frac{2}{3}π\right)\right\}$ Eq. 8

The voltage amplitude calculator 115 calculates the voltage amplitude Vom based on the calculated d-axis and *q-*axis voltages Vdr and Vqr. Specifically, the voltage amplitude calculator 115 calculates the voltage amplitude Vom according to the following equation Eq.9. The calculated voltage amplitude Vom is output to the voltage deviation calculator 111.${V}_{om} = \sqrt{{V}_{dr}^{2} + {V}_{qr}^{2}}$ Eq. 9

The above-described second embodiment achieves beneficial effects similar to those of the first embodiment. Note that the excitation parameter calculator 113 may make only one of the fluctuation frequency fh and the amplitude Idamp variable as a function of the deviation amount Xh, similarly to the modification of the first embodiment.

### THIRD EMBODIMENT

Hereinafter, the third embodiment will be described with reference to the drawings, focusing on differences from the first embodiment. In the third embodiment, a method is used in which the excitation voltage component of the field winding 70 is decreased by increasing the *d*-axis current flowing through the stator winding 52. The reason why this method is applicable will be described.

When the *d*-axis current is increased, it causes the *d-*axis inductance Ld to decrease due to the influence of magnetic saturation in the rotating electrical machine 40. In the term enclosed in braces on the right-hand side of the above equation Eq. 5, the smaller the *d*-axis inductance Ld is, the smaller the excitation voltage component becomes. Therefore, by increasing the *d*-axis current, the excitation voltage component of the field winding 70 is decreased.

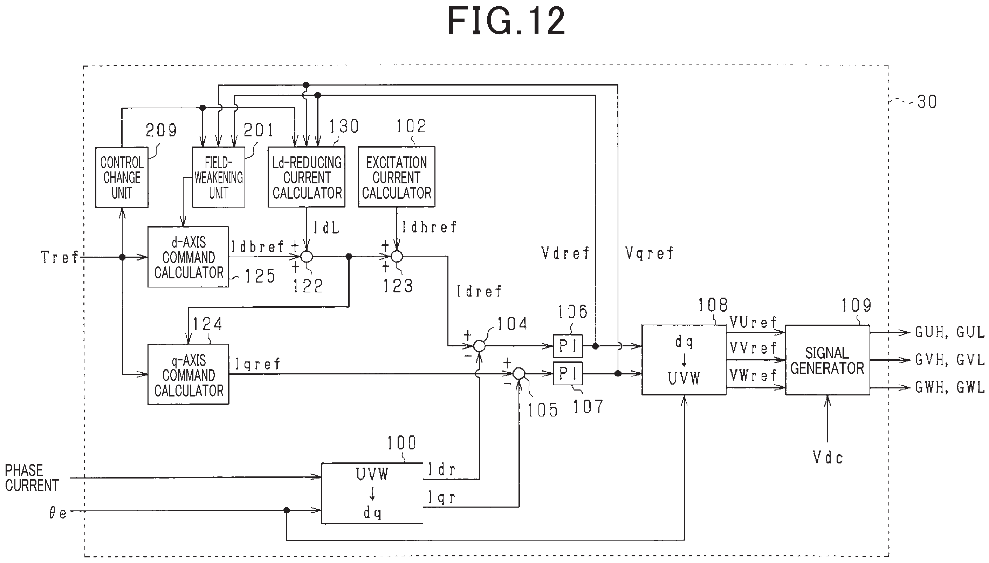

Fig. 12 shows a block diagram of torque control processing executed by the control device 30.

The *d*-axis command calculator 125 calculates a *d*-axis basic command current Idbref using the command torque Tref. The *d*-axis command calculator 125 may calculate the *d*-axis basic command current Idbref using, for example, map information in which the command torque Tref and the d-axis basic command current Idbref are associated with each other and the command torque Tref inputted thereto.

The inductance-reducing current calculator 130 functions as an excitation reducing unit and calculates the inductance reducing current IdL, which is a *d*-axis current to be superimposed on the *d*-axis basic command current Idbref, based on the calculated *d*-axis and *q*-axis voltage command values Vdref and Vqref. The inductance reducing current IdL is a value of a DC component.

The first adder 122 calculates an added value (i.e., the sum) of the *d*-axis basic command current Idbref and the inductance reducing current IdL.

The second adder 123 calculates the *d*-axis command current Idref by adding the *d*-axis high-frequency command current Idhref calculated by the excitation current calculator 102 to the added value calculated by the first adder 122. The calculated *d*-axis command current Idref is input to the *d*-axis deviation calculator 104.

The *q*-axis command calculator 124 calculates a *q*-axis command current Iqref based on the command torque Tref and the added value (i.e., Idbref + IdL) calculated by the first adder 122. The reason why the added value is used for calculating the *q*-axis command current Iqref is that an appropriate *q*-axis current corresponding to the command torque Tref changes according to the magnitude of the inductance reducing current IdL. The *q*-axis command calculator 124 may calculate the *q*-axis command current Iqref based on, for example, map information in which the command torque Tref, the added value, and the q-axis command current Iqref are associated with each other, and the input command torque Tref and the added value. The calculated *q*-axis command current Iqref is input to the q-axis deviation calculator 105.

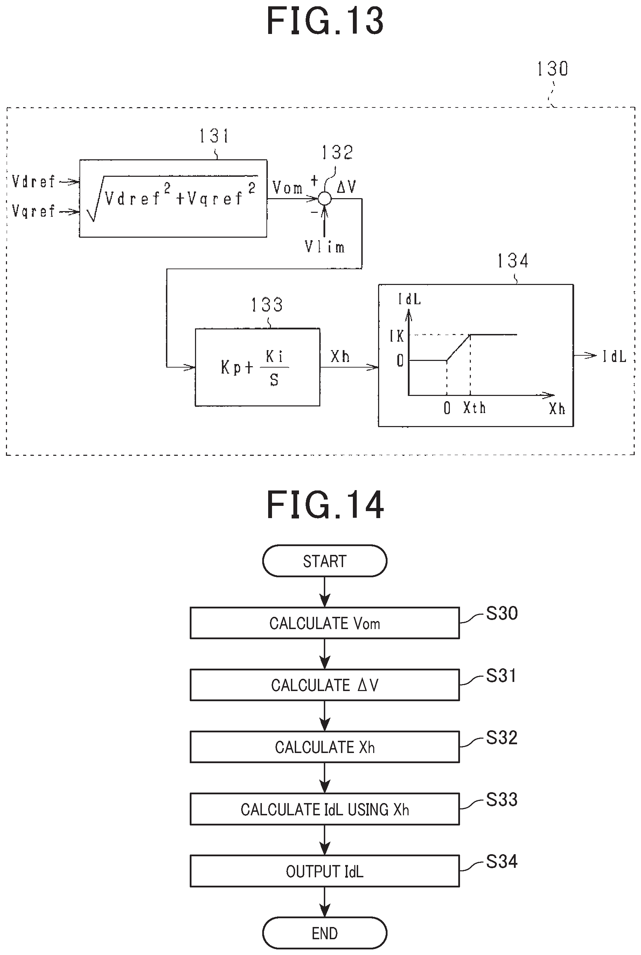

Next, an operation of the inductance-reducing current calculator 130 will be described with reference to Fig. 13.

The inductance-reducing current calculator 130 includes the voltage amplitude calculator 131, the voltage deviation calculator 132, and the feedback controller 133. Similar to the voltage amplitude calculator 110 in Fig. 8 described above, the voltage amplitude calculator 131 calculates the voltage amplitude Vom using the *d*-axis and *q*-axis voltage command values Vdref and Vqref.
the voltage deviation calculator 132 calculates the voltage deviation ΔV by subtracting the limit value Vlim from the calculated voltage amplitude Vom.

The feedback controller 133 calculates the deviation amount Xh, which is a manipulated variable for feedback-controlling the calculated voltage deviation ΔV to zero. In this embodiment, the feedback control used in the feedback controller 133 is proportional-integral control.

The inductance-reducing current calculator 130 includes the current value calculator 134. The current value calculator 134 calculates the inductance reducing current IdL using the calculated deviation amount Xh. Specifically, the inductance-reducing current calculator 130 sets the inductance reducing current IdL to zero when the deviation amount Xh is zero or less.

When the deviation amount Xh is greater than zero and less than the threshold Xth, the current value calculator 134 sets the inductance reducing current IdL to a value that is greater than zero and smaller than a predetermined current IK (>0), and sets the value to be larger as the deviation amount Xh is larger. When the deviation amount Xh is equal to or greater than the threshold Xth, the current value calculator 134 sets the inductance reducing current IdL to the predetermined current IK. In this manner, the inductance-reducing current calculator 130 adjusts or increases the inductance reducing current IdL, and consequently, the excitation voltage component is decreased (adjusted). In other words, the inductance-reducing current calculator 130 decreases the *d*-axis inductance Ld to be smaller than the current value thereof when the deviation amount Xh increases.

Fig. 14 shows a flowchart of an excitation reduction control program executed by the control device 30. This program is repeatedly executed, for example, at a predetermined control cycle.

After entering the program, the routine proceeds to step S30 wherein the voltage amplitude calculator 131 calculates the voltage amplitude Vom based on the *d*-axis and *q*-axis voltage command values Vdref and Vqref.

The routine proceeds to step S31 wherein the voltage deviation calculator 132 calculates the voltage deviation ΔV using the calculated voltage amplitude Vom.

The routine proceeds to step S32 wherein the feedback controller 133 calculates the deviation amount Xh using the calculated voltage deviation ΔV.

The routine proceeds to step S33 wherein the current value calculator 134 calculates the inductance reducing current IdL based on the calculated deviation amount Xh.

The routine proceeds to step S34 wherein the calculated inductance reducing current IdL is output to the first adder 122. The routine then terminates.

In this embodiment, when suppressing the output voltage from the inverter 20, the control changing unit 209 causes the excitation reduction control by the inductance-reducing current calculator 130 to be executed instead of the excitation reduction control by the excitation current calculator 102. In other words, when it is required to suppress the output voltage from the inverter 20, the control changing unit 209 execute the field-weakening control using the field-weakening unit 201 without executing the excitation reduction control using the inductance-reducing current calculator 130 in a high load region of the rotating electrical machine 40. The inductance-reducing current calculator 130 keeps the inductance reducing current IdL constant when the excitation reduction control is not executed. Specifically, as shown in Fig. 13, the inductance reducing current IdL is set to zero when the deviation amount Xh is zero or less. Further, when suppressing the output voltage of the inverter 20, the control changing unit 209 causes the inductance-reducing current calculator 130 to execute the excitation reduction control without causing the field-weakening unit 201 to execute the field-weakening control in a low load region of the rotating electrical machine 40.

The excitation voltage component increases as the *d-*axis inductance Ld of the field winding 70 increases. Therefore, in the excitation reduction control, the inductance-reducing current calculator 130 decreases the excitation voltage component by increasing the *d*-axis current flowing through the stator winding 52 to decrease the d-axis inductance Ld of the field winding 70 through magnetic saturation thereof. This enables the excitation voltage component to be decreased by utilizing the magnetic saturation.

It should be noted that each of the above embodiments may be modified and implemented as follows. For parts that are identical to those in each of the above embodiments, the same reference numerals are assigned and the descriptions thereof are incorporated.

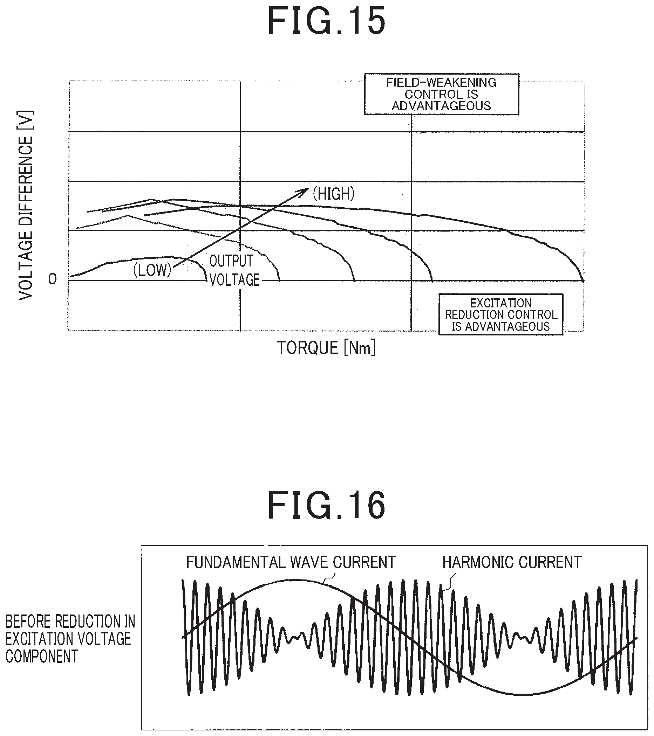

As shown in Fig. 15, there is a case where the rotating electrical machine 40 has a characteristic such that, from a low torque region to a high torque region of the rotating electrical machine 40, the output voltage from the inverter 20 during the field-weakening control is lower than the output voltage of the inverter 20 during the excitation reduction control when it is defined that the rotating electrical machine 40 outputs the same torque at the same rotational speed in both the excitation reduction control and the field-weakening control. In this case, when suppressing the output voltage from the inverter 20, the control changing unit 209 causes the field-weakening unit 201 to execute the field-weakening control without causing the excitation current calculator 102 (or the inductance-reducing current calculator 130) to execute the excitation reduction control in the low torque region of the rotating electrical machine 40. Therefore, in accordance with the characteristics of the rotating electrical machine 40, the field-weakening control, which further lowers the output voltage from the inverter 20 in the low torque region, can be executed, and the output voltage of the inverter 20 can be suppressed.

As shown in Fig. 16, before the excitation voltage component is decreased, a phase of a high-frequency current determined from an amplitude of a *d*-axis component and an amplitude of a *q*-axis component of the high-frequency current with respect to a phase of a fundamental wave current is a phase at which a field current can be caused to flow through the field winding 70 with the highest efficiency by the high-frequency current (i.e., a phase at which the field current is maximized when compared with high-frequency currents of the same magnitude). For this reason, the field current is decreased by changing the phase of the high-frequency current with respect to the fundamental wave current. In other words, the magnitude of the excitation voltage component changes depending on the phase of the high-frequency current that causes the field current to flow through the field winding 70 by flowing through the stator winding 52. Therefore, in the excitation reduction control, the excitation current calculator 102 decreases the excitation voltage component by adjusting the phase of the high-frequency current. This enables the excitation voltage component to be decreased by utilizing a relationship between the excitation voltage component and the phase of the high-frequency current that causes the field current to flow through the field winding 70.

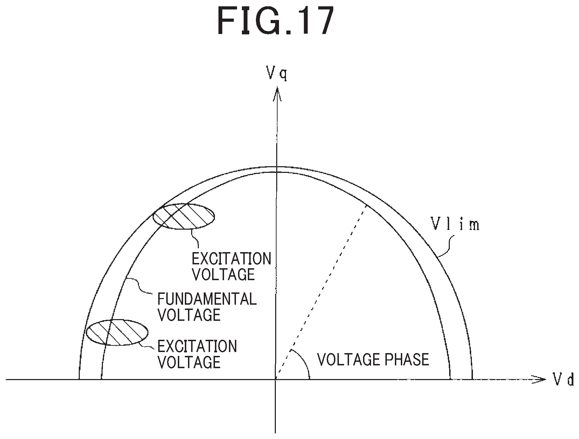

As shown in Fig. 17, a vector of an output voltage (will be referred to below as an output voltage vector) from the inverter 20 includes a basic voltage and an excitation voltage required for excitation of the field winding 70. The output voltage vector is limited by the limit value Vlim. The magnitude of the excitation voltage in the *d*-axis direction is larger than the magnitude of the excitation voltage in the *q-*axis direction. For this reason, when the output voltage vector is limited by the limit value Vlim, the excitation voltage becomes larger as the phase of the output voltage vector is closer to the *d*-axis. Therefore, as indicated by a dashed line in Fig. 5, the phase calculator 202 (serving as an excitation reducing unit) may decrease the excitation voltage component by bringing the phase of the output voltage vector of the inverter 20 closer to the *q*-axis than the current phase in the excitation reduction control. This enables the excitation voltage component to be decreased by utilizing a relationship between the excitation voltage and the phase of the output voltage vector of the inverter 20.

The rotating electrical machine 40 in the first to third embodiments has a characteristic such that, in the low torque region, under a condition where the rotating electrical machine 40 outputs the same torque in both the excitation reduction control and the field-weakening control, the output voltage from the inverter 20 during the field-weakening control is lower than that from the inverter 20 during the excitation reduction control when a fundamental wave current is larger than a threshold, and the output voltage from the inverter 20 during the excitation reduction control is lower than the output voltage from the inverter 20 during the field-weakening control when the fundamental wave current is smaller than the threshold. Therefore, when suppressing the output voltage from the inverter 20, the control changing unit 209 may cause the excitation reduction control by the excitation current calculator 102 and the field-weakening control by the field-weakening unit 201 to be executed in the low torque region of the rotating electrical machine 40. This enables, even in a case where the control that further lowers the output voltage of the inverter 20 changes as a function of the magnitude of the fundamental wave current, the output voltage from the inverter 20 to be stably suppressed. Note that the control changing unit 209 may cause the excitation reduction control by the inductance-reducing current calculator 130 to be executed instead of the excitation reduction control by the excitation current calculator 102.

The high-frequency current (specifically, a high-frequency excitation current) to be passed through the stator winding 52 is not limited to a harmonic current whose fluctuation frequency is *N* times (where *N* is an integer of 2 or more) the frequency of a fundamental wave current, and may be a current whose fluctuation frequency deviates from *N* times the frequency of the fundamental wave current.

The second winding portion 71b may be disposed closer to the stator 50 than the first winding portion 71a is in the radial direction.

The capacitors 81 constituting a resonance circuit of the rotor 60 may be electrically connected in parallel to the first winding portion 71a instead of the second winding portion 71b.

In the resonance circuit of the rotor 60, the capacitors 81 may be omitted.

The rotary electric machine 40 is not limited to an inner rotor type rotary electric machine, and may be an outer rotor type rotary electric machine. In this case, the main poles 62 of the rotary electric machine 40 protrude radially inward from the rotor core 61.

The rotary electric machine 40 is not limited to a star-connected rotary electric machine, and may be a delta-connected rotary electric machine.

In the first embodiment, the stator core 51 may be designed not to have teeth.

The rotary electric machine 40 is not limited to a rotary electric machine used as a vehicle main motor, and may be, for example, a rotary electric machine used as an *ISG* (Integrated Starter Generator) functioning as a motor-generator.

The moving body on which the rotating electrical machine system 90 is mounted is not limited to a vehicle, and may be, for example, an aircraft or a ship. Furthermore, the rotating electrical machine system 90 is not limited to a system mounted on a moving body, and may be a stationary system.

The control device 30 and the method achieved thereby described in the present disclosure may be realized by a dedicated computer provided by configuring a processor and a memory programmed to execute one or a plurality of functions (i.e., instructions) embodied by a computer program. Alternatively, the control device 30 and the method described in the present disclosure may be realized by a dedicated computer provided by configuring a processor with one or more dedicated hardware logic circuits. Further alternatively, the control device 30 and the method described in the present disclosure may be realized by one or more dedicated computers configured by a combination of a processor and a memory programmed to execute one or a plurality of functions and a processor configured by one or more hardware logic circuits. In addition, the computer program may be stored in a computer-readable non-transitory tangible recording medium as instructions to be executed by a computer.

Note that the above-described embodiments and modifications may be implemented in combination within a possible range.

The above-described embodiments and modifications provide following aspects.

### FIRST ASPECT

A control device that is applied to a rotating electrical machine system comprising: a rotating electrical machine having a stator including a stator winding and a rotor including a field winding; and an inverter electrically connected to the stator winding. The rotating electrical machine is configured such that a field current flows through the field winding by a voltage induced in the field winding as a result of a high-frequency voltage being applied to the stator winding. The control device comprising: (a) a switch controller (109) configured to perform switching control for the inverter so as to apply to the stator winding a composite voltage of the high-frequency voltage and a fundamental wave voltage having a frequency different from a frequency of the high-frequency voltage; (b) an excitation reducing unit (102, 130, 202) configured to perform excitation reduction control for reducing, from a current level, an excitation voltage component that is one of voltage components included in the composite voltage and that causes the field current to flow through the field winding; (c) a field-weakening unit configured to perform field-weakening control for adjusting a phase of a fundamental wave current flowing through the stator winding by the fundamental wave voltage so as to generate a magnetic flux in a direction opposite to a magnetic flux generated by the field winding; and (d) a control changing unit configured to change whether the excitation reduction control by the excitation reducing unit and/or the field-weakening control by the field-weakening unit are to be executed, in accordance with an operating region of the rotary electric machine to suppress an output voltage from the inverter.

### SECOND ASPECT

The control device according to the above-described first aspect, wherein the rotating electrical machine is configured to have a characteristic that, in a high load region, an output voltage from the inverter during the field-weakening control is lower than an output voltage from the inverter during the excitation reduction control under a condition where the rotating electrical machine outputs same torque in the excitation reduction control and the field-weakening control. The control changing unit causes the field-weakening unit to execute the field-weakening control without causing the excitation reducing unit to execute the excitation reduction control in the high load region of the rotating electrical machine when it is required to suppress the output voltage from the inverter.

### THIRD ASPECT

The control device according to the above-described first or second aspect, wherein the rotating electrical machine has a characteristic that, in a low load region, an output voltage from the inverter during the excitation reduction control is lower than an output voltage from the inverter during the field-weakening control under a condition where the rotating electrical machine outputs same torque in the excitation reduction control and the field-weakening control. The control changing unit causes the excitation reducing unit to execute the excitation reduction control without causing the field-weakening unit to execute the field-weakening control in the low load region of the rotating electrical machine when suppressing the output voltage from the inverter.

### FOURTH ASPECT

The control device according to the above-described first or second aspect, wherein the rotating electrical machine has a characteristic that, from a low load region to a high load region, an output voltage from the inverter during the field-weakening control is lower than an output voltage from the inverter during the excitation reduction control under a condition where the rotating electrical machine outputs same torque in the excitation reduction control and the field-weakening control. The control changing unit causes the field-weakening unit to execute the field-weakening control without causing the excitation reducing unit to execute the excitation reduction control in the low load region of the rotating electrical machine when suppressing the output voltage from the inverter.

### FIFTH ASPECT

The control device according to the above-described first or second aspect, wherein the rotating electrical machine has a characteristic that, in a low load region, an output voltage from the inverter during the field-weakening control is lower than an output voltage from the inverter during the excitation reduction control when the fundamental wave current is larger than a threshold, and the output voltage from the inverter during the excitation reduction control is lower than the output voltage from the inverter during the field-weakening control when the fundamental wave current is smaller than the threshold, under a condition where the rotating electrical machine outputs same torque in the excitation reduction control and the field-weakening control. The control changing unit causes the excitation reducing unit to execute the excitation reduction control and causes the field-weakening unit to execute the field-weakening control in the low load region of the rotating electrical machine when suppressing the output voltage from the inverter.

### SIXTH ASPECT

The control device according to the above-described first or second aspect, wherein the excitation reducing unit reduces the excitation voltage component by reducing, from a current level, an amplitude of a *d*-axis high-frequency current flowing through the stator winding in the excitation reduction control.

### SEVENTH ASPECT

The control device according to the above-described first or second aspect, wherein the excitation reducing unit reduces the excitation voltage component by lowering, from a current level, a frequency of a *d*-axis high-frequency current flowing through the stator winding in the excitation reduction control.

### EIGHTH ASPECT

The control device according to the above-described first or second aspect, wherein the excitation reducing unit reduces the excitation voltage component by increasing, from a current level, a *d*-axis current flowing through the stator winding to reduce an inductance of the field winding due to magnetic saturation in the rotating electrical machine in the excitation reduction control.

### NINTH ASPECT

The control device according to the above-described first or second aspect, wherein the excitation reducing unit reduces the excitation voltage component by adjusting, in the excitation reduction control, a phase of a high-frequency current that flows through the stator winding to cause the field current to flow through the field winding such that a *d-*axis current component of an amplitude of the high-frequency current decreases.

### TENTH ASPECT

The control device according to the above-described first or second aspect, wherein the excitation reducing unit reduces the excitation voltage component by making a phase of a vector of an output voltage from the inverter closer to a *q*-axis than a current level is in the excitation reduction control.

### ELEVENTH ASPECT

The control device according to the above-described first or second aspect, wherein the excitation reducing unit maintains an amplitude, a frequency, and a phase of a *d*-axis high-frequency current flowing through the stator winding constant when the excitation reduction control is not executed.

### TWELFTH ASPECT

The control device according to the above-described first or second aspect, wherein the control changing unit changes whether the excitation reduction control by the excitation reducing unit and/or the field-weakening control by the field-weakening unit are to be executed, in accordance with the operating region of the rotating electrical machine such that the output voltage from the inverter is suppressed when the output voltage from the inverter is higher than a voltage limit value.

### THIRTEENTH ASPECT

The control device according to the above-described first or second aspect, wherein the control changing unit changes whether the excitation reduction control by the excitation reducing unit and/or the field-weakening control by the field-weakening unit are to be executed, in accordance with the operating region of the rotating electrical machine such that the output voltage from the inverter is suppressed when a rotational speed of the rotating electrical machine is higher than a predetermined rotational speed.

Although the present disclosure has been described in terms of the embodiments, it is understood that the present disclosure is not limited to the embodiments and structures. The present disclosure also encompasses various modifications and variations within an equivalent range. In addition, various combinations and forms, and further, other combinations and forms including only one element, more than one element, or less than one element, are also within the scope and spirit of the present disclosure.

## Claims

1. A control device (30) that is applied to a rotating electrical machine system (90) comprising: a rotating electrical machine (40) having a stator (50) including a stator winding (52) and a rotor (60) including a field winding (70); and an inverter (20) electrically connected to the stator winding, the rotating electrical machine being configured such that a field current flows through the field winding by a voltage induced in the field winding as a result of a high-frequency voltage being applied to the stator winding,
the control device comprising:
a switch controller (109) configured to perform switching control for the inverter so as to apply to the stator winding a composite voltage of the high-frequency voltage and a fundamental wave voltage having a frequency different from a frequency of the high-frequency voltage;
an excitation reducing unit (102, 130, 202) configured to perform excitation reduction control for reducing, from a current level, an excitation voltage component that is one of voltage components included in the composite voltage and that causes the field current to flow through the field winding;
a field-weakening unit (201) configured to perform field-weakening control for adjusting a phase of a fundamental wave current flowing through the stator winding by the fundamental wave voltage so as to generate a magnetic flux in a direction opposite to a magnetic flux generated by the field winding; and
a control changing unit (209) configured to change whether the excitation reduction control by the excitation reducing unit and/or the field-weakening control by the field-weakening unit are to be executed, in accordance with an operating region of the rotary electric machine to suppress an output voltage from the inverter.

2. The control device according to claim 1, wherein the rotating electrical machine is configured to have a characteristic that, in a high load region, an output voltage from the inverter during the field-weakening control is lower than an output voltage from the inverter during the excitation reduction control under a condition where the rotating electrical machine outputs same torque in the excitation reduction control and the field-weakening control, and
the control changing unit causes the field-weakening unit to execute the field-weakening control without causing the excitation reducing unit to execute the excitation reduction control in the high load region of the rotating electrical machine when it is required to suppress the output voltage from the inverter.

3. The control device according to claim 1 or 2, wherein the rotating electrical machine has a characteristic that, in a low load region, an output voltage from the inverter during the excitation reduction control is lower than an output voltage from the inverter during the field-weakening control under a condition where the rotating electrical machine outputs same torque in the excitation reduction control and the field-weakening control, and
the control changing unit causes the excitation reducing unit to execute the excitation reduction control without causing the field-weakening unit to execute the field-weakening control in the low load region of the rotating electrical machine when suppressing the output voltage from the inverter.

4. The control device according to claim 1 or 2, wherein the rotating electrical machine has a characteristic that, from a low load region to a high load region, an output voltage from the inverter during the field-weakening control is lower than an output voltage from the inverter during the excitation reduction control under a condition where the rotating electrical machine outputs same torque in the excitation reduction control and the field-weakening control, and
the control changing unit causes the field-weakening unit to execute the field-weakening control without causing the excitation reducing unit to execute the excitation reduction control in the low load region of the rotating electrical machine when suppressing the output voltage from the inverter.

5. The control device according to claim 1 or 2, wherein the rotating electrical machine has a characteristic that, in a low load region, an output voltage from the inverter during the field-weakening control is lower than an output voltage from the inverter during the excitation reduction control when the fundamental wave current is larger than a threshold, and the output voltage from the inverter during the excitation reduction control is lower than the output voltage from the inverter during the field-weakening control when the fundamental wave current is smaller than the threshold, under a condition where the rotating electrical machine outputs same torque in the excitation reduction control and the field-weakening control, and
the control changing unit causes the excitation reducing unit to execute the excitation reduction control and causes the field-weakening unit to execute the field-weakening control in the low load region of the rotating electrical machine when suppressing the output voltage from the inverter.

6. The control device according to claim 1 or 2, wherein the excitation reducing unit (102) reduces the excitation voltage component by reducing, from a current level, an amplitude of a *d*-axis high-frequency current flowing through the stator winding in the excitation reduction control.

7. The control device according to claim 1 or 2, wherein the excitation reducing unit (102) reduces the excitation voltage component by lowering, from a current level, a frequency of a *d*-axis high-frequency current flowing through the stator winding in the excitation reduction control.

8. The control device according to claim 1 or 2, wherein the excitation reducing unit (130) reduces the excitation voltage component by increasing, from a current level, a *d-*axis current flowing through the stator winding to reduce an inductance of the field winding due to magnetic saturation in the rotating electrical machine in the excitation reduction control.

9. The control device according to claim 1 or 2, wherein the excitation reducing unit (102) reduces the excitation voltage component by adjusting, in the excitation reduction control, a phase of a high-frequency current that flows through the stator winding to cause the field current to flow through the field winding such that a *d*-axis current component of an amplitude of the high-frequency current decreases.

10. The control device according to claim 1 or 2, wherein the excitation reducing unit (202) reduces the excitation voltage component by making a phase of a vector of an output voltage from the inverter closer to a *q*-axis than a current level is in the excitation reduction control.

11. The control device according to claim 2, wherein the excitation reducing unit maintains an amplitude, a frequency, and a phase of a *d*-axis high-frequency current flowing through the stator winding constant when the excitation reduction control is not executed.

12. The control device according to claim 1 or 2, wherein the control changing unit changes whether the excitation reduction control by the excitation reducing unit and/or the field-weakening control by the field-weakening unit are to be executed, in accordance with the operating region of the rotating electrical machine such that the output voltage from the inverter is suppressed when the output voltage from the inverter is higher than a voltage limit value.

13. The control device according to claim 1 or 2, wherein the control changing unit changes whether the excitation reduction control by the excitation reducing unit and/or the field-weakening control by the field-weakening unit are to be executed, in accordance with the operating region of the rotating electrical machine such that the output voltage from the inverter is suppressed when a rotational speed of the rotating electrical machine is higher than a predetermined rotational speed.

14. A control program that is applied to a rotating electrical machine system (90) comprising: a rotating electrical machine (40) having a stator (50) including a stator winding (52) and a rotor (60) including a field winding (70); and an inverter (20) electrically connected to the stator winding, the rotating electrical machine being configured such that a field current flows through the field winding by a voltage induced in the field winding as a result of a high-frequency voltage being applied to the stator winding, the control program causing a computer (30) to execute:
a process of performing switching control for the inverter so as to apply to the stator winding a composite voltage of the high-frequency voltage and a fundamental wave voltage having a frequency different from a frequency of the high-frequency voltage;
a process of performing excitation reduction control for reducing, from a current level, an excitation voltage component that is one of voltage components included in the composite voltage and that causes the field current to flow through the field winding;
a process of performing field-weakening control for controlling a phase of a fundamental wave current flowing through the stator winding by the fundamental wave voltage so as to generate a magnetic flux in a direction opposite to a magnetic flux generated by the field winding; and
a process of changing whether the excitation reduction control and/or the field-weakening control are to be executed, in accordance with an operating region of the rotating electrical machine such that an output voltage from the inverter is suppressed.

15. A rotating electrical machine system (90) comprising: a rotating electrical machine (40) having a stator (50) including a stator winding (52) and a rotor (60) including a field winding (70); an inverter (20) electrically connected to the stator winding; and a control device (30) for the rotating electrical machine, the rotating electrical machine being configured such that a field current flows through the field winding by a voltage induced in the field winding as a result of a high-frequency voltage being applied to the stator winding, the control device comprising:
a switch controller (109) configured to perform switching control for the inverter so as to apply to the stator winding a composite voltage of the high-frequency voltage and a fundamental wave voltage having a frequency different from a frequency of the high-frequency voltage;
an excitation reducing unit (102, 130, 202) configured to perform excitation reduction control for reducing, from a current level, an excitation voltage component that is one of voltage components included in the composite voltage and that causes the field current to flow through the field winding;
a field-weakening unit (201) configured to perform field-weakening control for adjusting a phase of a fundamental wave current flowing through the stator winding by the fundamental wave voltage so as to generate a magnetic flux in a direction opposite to a magnetic flux generated by the field winding; and
a control changing unit (209) configured to change whether the excitation reduction control by the excitation reducing unit and/or the field-weakening control by the field-weakening unit are to be executed, in accordance with an operating region of the rotary electric machine to suppress an output voltage from the inverter.
